(19) Europäisches Patentamt
European Patent Office
Office européen des brevets

(11) Veröffentlichungsnummer: **0 041 139**
**B1**

# (12) EUROPÄISCHE PATENTSCHRIFT

(45) Veröffentlichungstag der Patentschrift: **08.06.83**

(51) Int. Cl.³: **C 08 F 10/00**, C 08 F 4/64

(21) Anmeldenummer: **81103461.0**

(22) Anmeldetag: **07.05.81**

## (54) Verfahren zum Herstellen von Homo- und Copolymerisaten von alpha-Monoolefinen mittels eines Ziegler-Natta-Katalysatorsystems.

(30) Priorität: **02.06.80 DE 3020870**

(43) Veröffentlichungstag der Anmeldung: **09.12.81 Patentblatt 81/49**

(45) Bekanntmachung des Hinweises auf die Patenterteilung: **08.06.83 Patentblatt 83/23**

(84) Benannte Vertragsstaaten: **AT BE DE FR GB IT NL**

(56) Entgegenhaltungen:
**EP-A-0 009 724**
**DE-A-2 129 659**
**DE-A-2 658 939**
**DE-A-2 841 645**

(73) Patentinhaber: **BASF Aktiengesellschaft, Carl-Bosch-Strasse 38, D-6700 Ludwigshafen (DE)**

(72) Erfinder: **Jaggard, James F.R., Dr., Bruesseler Ring 45, D-6700 Ludwigshafen (DE)**
Erfinder: **Klaerner, Peter, Dr., Hauptstrasse 62, D-6719 Battenberg (DE)**
Erfinder: **Schweier, Guenther, Dr., Friedrich-Pietzsch-Strasse 14, D-6701 Friedelsheim (DE)**

**EP 0 041 139 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zum Herstellen von Homo- und Copolymerisaten von α-Monoolefinen mittels eines Ziegler-Natta-Katalysatorsystems

Die vorliegende Erfindung basiert auf einem Verfahren zum Herstellen von Homo- und Copolymerisaten von $C_2$- bis $C_6$-α-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer Titan-III-Komponente bei deren Herstellung man

(1.1) eine Titan enthaltende Verbindung (a) der Formel

$TiCl_3 \cdot nAlCl_3$,

worin n für eine Zahl im Bereich von 0,01 bis 1, insbesondere von 0,1 bis 0,4 steht, und

(1.2) einen Ester (b), der insgesamt 2 bis 34, insbesondere 2 bis 18 Kohlenstoffatome enthält und die Formel

$R^1$-O-CO-$R^2$ oder

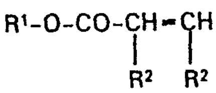

hat, worin stehen

$R^1$ für (I) eine 1 bis 16, insbesondere 1 bis 8 Kohlenstoffatome aufweisende Alkylgruppe oder (II) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können,

$R^2$ für (I) Wasserstoff, (II) eine 1 bis 18, insbesondere 2 bis 12 Kohlenstoffatome aufweisende Alkylgruppe, (III) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können, (IV) eine Phenylgruppe oder (V) eine insgesamt 7 bis 23, insbesondere 7 bis 14 Kohlenstoffatome aufweisende Alkylphenylgruppe, wobei bis zu 5 Wasserstoffatome des Phenylrests durch 1 bis 4 Kohlenstoffatome aufweisende Alkylgruppen substituiert sein können,

einer Mahlbehandlung unterzieht, derart, dass man

(A) mit einer Kugelschwingmühle arbeitet, die eine Mahlbeschleunigung von 30 bis 80, insbesondere von 45 bis 55 m · $sec^{-2}$ hat,

(B) die Mühle zunächst mit der Titan enthaltenden Verbindung (a) beschickt und – gegebenenfalls – bei einer Temperatur von −50 bis +100, insbesondere −30 bis +50°C über eine Zeitspanne von 0,5 bis 100, insbesondere 2 bis 20 Stunden in Abwesenheit von Verdünnungsmitteln betreibt, dann

(C) unter Mahlen bei einer Temperatur des Mahlgutes von −50 bis +80, insbesondere von −30 bis +60°C die einem Molverhältnis Titan in der Titan enthaltenden Verbindung (a): Ester (b) von 1:1,5 bis 1:0,01, insbesondere von 1:0,7 bis 1:0,1 entsprechende Menge des Esters (b) mit einer Geschwindigkeit von 0,01 bis 200, insbesondere von 1 bis 80 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 120, insbesondere von 20 bis 70 Stunden auf einer Temperatur von +15 bis +100, insbesondere von +20 bis +60°C hält, hierauf

(E) – gegebenenfalls – das gemäss (D) erhaltene Produkt über eine Zeitspanne von 0,5 bis 60, insbesondere von 2 bis 30 Minuten bei einer Temperatur von −50 bis +5, insbesondere von −40 bis 0°C in Abwesenheit von Verdünnungsmitteln weitervermahlt, sodann

(F) – gegebenenfalls und vorteilhafterweise – das gemäss (D) oder (E) erhaltene Produkt ohne es zu mahlen über eine Zeitspanne von 0,25 bis 300, insbesondere 2 bis 150 Std. auf einer Temperatur von +20 bis +150, insbesondere +45 bis +100°C hält, und danach

(G) – gegebenenfalls – das gemäss (F) erhaltene Produkt über eine Zeitspanne von 0,5 bis 60, insbesondere 2 bis 30 Minuten bei einer Temperatur von −50 bis +5, insbesondere von −40 bis 0°C in Abwesenheit von Verdünnungsmitteln nachvermahlt,

(2) einer Aluminiumalkyl-Komponente der Formel

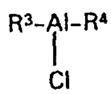

worin $R^3$ und $R^4$ gleich oder verschieden sind und stehen für eine 1 bis 8, insbesondere 2 bis 4 Kohlenstoffatomen aufweisende Alkylgruppe, sowie

(3) – gegebenenfalls und vorteilhafterweise – einem phenolischen Stoff der Formel

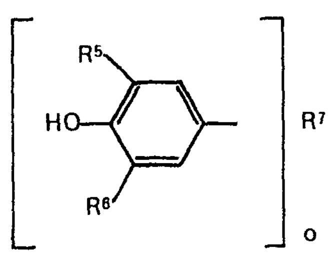

oder

(I)

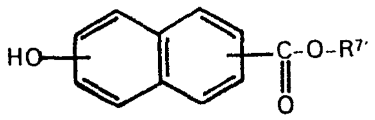

(II)

worin stehen

$R^5$ für eine $C_1$- bis $C_6$-, insbesondere $C_3$- bis $C_4$-Alkylgruppe,

$R^6$ für Wasserstoff oder eine $C_1$- bis $C_6$-, insbesondere $C_3$- bis $C_4$-Alkylgruppe,

$R^7$ für Wasserstoff oder einen nicht mehr als 30, insbesondere nicht mehr als 24 Kohlenstoffatome sowie - gegebenenfalls - bis zu insgesamt 6, insbesondere bis zu insgesamt 4 Äthergruppen und/oder Estergruppen aufweisenden gesättigten Kohlenwasserstoffrest,

$R^{7'}$ für eine $C_2$- bis $C_{24}$-, insbesondere $C_4$- bis $C_{18}$-Alkylgruppe, und

o für eine ganze Zahl von 1 bis 6, insbesondere 1 bis 4,

mit den Massgaben, dass das Atomverhältnis Titan aus der Titan-III-Komponente (1) : Aluminium aus der Aluminiumalkyl-Komponente (2) im Bereich von 1:1 bis 1:20, insbesondere 1:2 bis 1:15 liegt und, dass - im gegebenen Fall - das Molverhältnis Aluminiumalkyl-Komponente (2) : phenolischer Stoff (3) 1:1 bis 40:1, insbesondere 3:1 bis 25:1 beträgt.

Verfahren dieser Art sind bekannt; ihre Besonderheit gegenüber vergleichbaren anderen Verfahren liegt in der speziellen Ausgestaltung des Katalysatorsystems, wobei als Prototypen für den vorliegenden Fall die aus den DE-A 2658939 (= US-A 4154699) und 2841645 bekannten Verfahren genannt werden können.

Die speziellen Ausgestaltungen des Katalysatorsystems werden vorgenommen, um bestimmte Ziele zu erreichen, z.B. die folgenden:

(a) Katalysatorsysteme, die bei der Polymerisation von α-Monoolefinen, wie insbesondere Propylen, zu Polymerisaten mit einem hohen Anteil an stereoregulärem (= isotaktischem) Polymerisat führen.

(b) Katalysatorsysteme, die eine erhöhte Ausbeute an Polymerisat zu liefern vermögen, nämlich Systeme mit einer erhöhten Produktivität, d.h. Systeme, bei denen die Menge an gebildetem Polymerisat pro Gewichtseinheit des Katalysatorsystems erhöht ist.

(c) Katalysatorsysteme, durch die weniger Halogen in das Polymerisat eingebracht werden; - was zu erreichen ist, indem die Ausbeute gemäss (b) gesteigert wird und/oder ein Titanhalogenid eingesetzt wird, das möglichst wenig Halogen erhält.

(d) Katalysatorsysteme, deren Aktivitätsmaximum über eine möglichst lange Zeit konstant bzw. relativ konstant bleibt; - was für die Katalysatorausbeuten von erheblicher Bedeutung ist.

(e) Katalysatorsysteme, die es erlauben, durch Erhöhung der Polymerisationstemperatur eine Umsatzsteigerung zu bewirken ohne signifikante Minderung der Stereoregularität der Polymerisate; - ein Effekt, der generell erwünscht ist, insbesondere auch bei der Trockenphasenpolymerisation.

(f) Katalysatorsysteme, durch welche - insbesondere bei relativ hohen Polymerisationstemperaturen - die morphologischen Eigenschaften der Polymerisate in bestimmter Weise beeinflusst werden, etwa im Sinne einer einheitlichen Korngrösse und/oder einer Verringerung der Feinstkornanteile und/oder eines hohen Schüttgewichtes; - was z.B. für die technische Beherrschung der Polymerisationssysteme, die Aufarbeitung der Polymerisate und/oder die Verarbeitbarkeit der Polymerisate von Bedeutung sein kann.

(g) Katalysatorsysteme, die einfach und sicher herzustellen und gut handzuhaben sind; - z.B. solche, die sich in (inerten) Kohlenwasserstoff-Hilfsmedien zubereiten lassen.

(h) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; - was z.B. für die Thermodynamik der Verfahrensführung von Bedeutung sein kann.

(i) Katalysatorsysteme, die auf spezielle Polymerisationsverfahren zugeschnitten sind; - etwa solche, die z.B. entweder auf die spezifischen Besonderheiten der Suspensionspolymerisation oder auf die spezifischen Besonderheiten der Trockenphasenpolymerisation abgestimmt sind.

(j) Katalysatorsysteme, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch spezielle Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muss.

In diesem Rahmen liegt die Aufgabenstellung der vorliegenden Erfindung: Eine neue Ausgestaltung eines Katalysatorsystems aufzuzeigen, mit der man gegenüber bekannten Ausgestaltungen bei relativ höheren Temperaturen - mit entsprechend relativ hohen Ausbeuten an Polymerisat - Polymerisate mit einer relativ höheren Stereoregularität (= Isotaktizität) und zusätzlich, insbesondere auch günstigen morphologischen

Eigenschaften – wie geringen Feinstkornanteil – erhalten kann.

Es wurde gefunden, dass die gestellte Aufgabe gelöst werden kann mit einem Katalysatorsystem der eingangs definierten Art, dessen Titan-III-Komponente (1) nach der Mahlbehandlung einer zusätzlichen speziellen chemischen Behandlung unterworfen wird.

Gegenstand der vorliegenden Erfindung ist mithin ein Verfahren zum Herstellen von Homo- und Copolymerisaten von $C_2$- bis $C_6$-$\alpha$-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer Titan-III-Komponente, bei deren Herstellung man

(1.1) eine Titan enthaltende Verbindung (a) der Formel

$TiCl_3 \cdot nAlCl_3$,

worin n für eine Zahl im Bereich von 0,01 bis 1, insbesondere von 0,1 bis 0,4 steht, und

(1.2) einen Ester (b), der insgesamt 2 bis 34, insbesondere 2 bis 18 Kohlenstoffatome enthält und die Formel

$R^1$-O-CO-$R^2$ oder

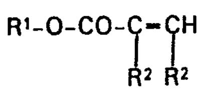

hat, worin stehen

$R^1$ für (I) eine 1 bis 16, insbesondere 1 bis 8 Kohlenstoffatome aufweisenden Alkylgruppe oder (II) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können,

$R^2$ für (I) Wasserstoff, (II) eine 1 bis 18, insbesondere 2 bis 12 Kohlenstoffatome aufweisende Alkylgruppe, (III) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können, (IV) eine Phenylgruppe oder (V) eine insgesamt 7 bis 23, insbesondere 7 bis 14 Kohlenstoffatome aufweisende Alkylphenylgruppe, wobei bis zu 5 Wasserstoffatome des Phenylrests durch 1 bis 4 Kohlenstoffatome aufweisende Alkylgruppen substituiert sein können,

einer Mahlbehandlung unterzieht, derart, dass man

(A) mit einer Kugelschwingmühle arbeitet, die eine Mahlbeschleunigung von 30 bis 80, insbesondere von 45 bis 55 m $\cdot$ $sec^{-2}$ hat,

(B) die Mühle zunächst mit der Titan enthaltenden Verbindung (a) beschickt und – gegebenenfalls – bei einer Temperatur von −50 bis +100, insbesondere −30 bis +50°C über eine Zeitspanne von 0,5 bis 100, insbesondere 2 bis 20 Stunden in Abwesenheit von Verdünnungsmitteln betreibt, dann

(C) unter Mahlen bei einer Temperatur des Mahlgutes von −50 bis +80, insbesondere von −30 bis +60°C die einem Molverhältnis Titan in der Titan enthaltenden Verbindung (a): Ester (b) von 1:1,5 bis 1:0,01, insbesondere von 1:0,7 bis 1:0,1 entsprechende Menge des Esters (b) mit einer Geschwindigkeit von 0,01 bis 200, insbesondere von 1 bis 80 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 120, insbesondere von 20 bis 70 Stunden auf einer Temperatur von +15 bis +100, insbesondere von +20 bis +60°C hält, hierauf

(E) – gegebenenfalls – das gemäss (D) erhaltene Produkt über eine Zeitspanne von 0,5 bis 60, insbesondere von 2 bis 30 Minuten bei einer Temperatur von −50 bis +5, insbesondere von −40 bis 0°C in Abwesenheit von Verdünnungsmitteln weitervermahlt, sodann

(F) – gegebenenfalls und vorteilhafterweise – das gemäss (D) oder (E) erhaltene Produkt ohne es zu mahlen über eine Zeitspanne von 0,25 bis 300, insbesondere 2 bis 150 Std. auf einer Temperatur von +20 bis +150, insbesondere +45 bis +100°C hält, und danach

(G) – gegebenenfalls – das gemäss (F) erhaltene Produkt über eine Zeitspanne von 0,5 bis 60, insbesondere 2 bis 30 Minuten bei einer Temperatur von −50 bis +5, insbesondere von −40 bis 0°C in Abwesenheit von Verdünnungsmitteln nachvermahlt,

(2) einer Aluminiumalkyl-Komponente der Formel

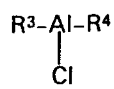

worin $R^3$ und $R^4$ gleich oder verschieden sind und stehen für eine 1 bis 8, insbesondere 2 bis 4 Kohlenstoffatome aufweisende Alkylgruppe, sowie

(3) – gegebenenfalls und vorteilhafterweise – einem phenolischen Stoff der Formel

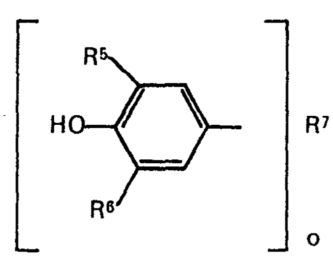

oder (I)

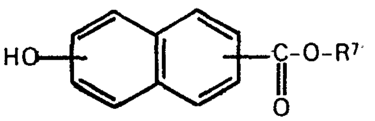

(II)

worin stehen

$R^5$ für eine $C_1$- bis $C_6$-, insbesondere $C_3$- bis $C_4$-Alkylgruppe,

$R^6$ für Wasserstoff oder eine $C_1$- bis $C_6$-, insbesondere $C_3$- bis $C_4$-Alkylgruppe,

$R^7$ für Wasserstoff oder einen nicht mehr als 30, insbesondere nicht mehr als 24 Kohlenstoffatome sowie – gegebenenfalls – bis zu insgesamt 6, insbesondere bis zu insgesamt 4 Äthergruppen und/oder Estergruppen aufweisenden gesättigten Kohlenwasserstoffrest,

$R^{7'}$ für eine $C_2$- bis $C_{24}$-, insbesondere $C_4$- bis $C_{18}$-Alkylgruppe, und

o für eine ganze Zahl von 1 bis 6, insbesondere 1 bis 4,

mit den Massgaben, dass das Atomverhältnis Titan aus der Titan-III-Komponente (1) : Aluminium aus der Aluminiumalkyl-Komponente (2) im Bereich von 1:1 bis 1:20, insbesondere 1:2 bis 1:15 liegt, und dass – im gegebenen Fall – das Molverhältnis Aluminiumalkyl-Komponente (2) : phenolischer Stoff (3) 1:1 bis 40:1, insbesondere 3:1 bis 25:1 beträgt.

Das erfindungsgemässe Verfahren ist dadurch gekennzeichnet, dass eine Titan-III-Komponente (1) eingesetzt wird, die wie folgt erhalten wurde

(H) es wird eine Suspension hergestellt aus

($H_1$) 1 Gew.-Teil des gemäss (D), (E), (F) oder (G) erhaltenen Produkts,

($H_2$) 0,5 bis 20, insbesondere 0,7 bis 10 Gew.-Teilen eines unter Normalbedingungen flüssigen und unterhalb von 150, insbesondere unterhalb von 100°C siedenden Kohlenwasserstoffs (c), sowie

($H_3$) einer Sauerstoff enthaltenden Verbindung (d), bestehend aus einem Alkohol, der 1 bis 20, insbesondere 2 bis 8 Kohlenstoffatome enthält und die allgemeine Formel

$X(OH)_y$

hat, worin stehen y für 1 oder 2, insbesondere 1, und X für den Rest eines Kohlenwasserstoffs aus der Reihe der Aromaten oder der gesättigten Aliphaten bzw. Cycloaliphaten, insbesondere der Alkane, in einer solchen Menge, dass sich ein Molverhältnis Titan aus der Titan enthaltenden Verbindung (a) : Sauerstoff enthaltende Verbindung (d) von 1:0,01 bis 1:2, insbesondere 1:0,08 bis 1:0,5 ergibt, anschliessend wird

(I) die gemäss (H) erhaltene Suspension unter heftiger Bewegung über eine Zeitspanne von 5 bis 120, insbesondere 15 bis 60 Minuten auf einer Temperatur von +40 bis +140, insbesondere +50 bis +80°C gehalten, dann auf eine Temperatur von +15 bis +25°C gebracht, hierauf wird

(J) – gegebenenfalls – die gemäss (I) erhaltene Suspension mit einer Aluminium enthaltenden Verbindung (e) der allgemeinen Formel

$AlR^8_x Y_{3-x}$,

worin stehen x für 1, 2 oder 3, insbesondere 2 oder 3, und vor allem 2, Y für Chlor oder $R^8$, und $R^8$ für gleiche oder verschiedene, 1 bis 12, insbesondere 1 bis 8 Kohlenstoffatome aufweisende Alkylgruppen,

in einer solchen Menge versetzt, dass sich ein Molverhältnis Hydroxygruppen aus der Sauerstoff enthaltenden Verbindung (d) : Alkylgruppen aus der Aluminium enthaltenden Verbindung (e) von 1:0,005 bis 1:2, insbesondere 1:0,25 bis 1:1 ergibt, und schliesslich wird

(K) – gegebenenfalls – aus der gemäss (I) oder (J) erhaltenen Suspension der Feststoff abgetrennt, gewünschtenfalls mit einem unter Normalbedingungen flüssigen und unterhalb von 150, insbesondere unterhalb von 100°C siedenden Kohlenwasserstoff gewaschen sowie getrocknet; –

und derart eine gemäss (I) oder (J) erhaltene, in suspendierter Form oder gemäss (K) erhaltene, in isolierter Form als Feststoff vorliegende Titan-III-Komponente (1) gewonnen.

Zu dem erfindungsgemässen Verfahren ist im einzelnen das folgende zu bemerken:

Das Polymerisationsverfahren als solches kann – unter Beachtung der kennzeichnenden Besonderheit – in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, oder Trockenphasen-Polymerisationsverfahren. Die erwähnten technologischen Ausgestaltungen – mit anderen Worten: die technologischen Varianten der Polymerisation von α-Monoolefinen nach Ziegler-Natta – sind aus der Literatur und Praxis wohlbekannt, so dass sich nähere Ausführungen zu ihnen erübrigen.

Der Vollständigkeit halber ist zu erwähnen, dass sich beim erfindungsgemässen Verfahren auch die Molekulargewichte der Polymerisate durch die einschlägig üblichen Massnahmen regeln lassen, z.B. mittels Reglern, wie insbesondere Wasserstoff.

Des weiteren ist noch festzuhalten, dass beim erfindungsgemässen Verfahren die Komponenten des Katalysatorsystems in mannigfacher Weise in den Polymerisationsraum eingebracht werden können, z.B. (i) die Titan-Komponente (61), die Aluminiumalkyl-Komponente (2) sowie – gegebenenfalls – der phenolische Stoff (3) alle örtlich gemeinsam, (ii) die gleichen Komponenten alle örtlich getrennt voneinander, (iii) die Komponente (1) einerseits und ein Gemisch aus den Komponenten (2) und (3) andererseits örtlich getrennt voneinander – was insbesondere beim Trockenphasen-Polymerisationsverfahren von

Vorteil sein kann –, oder (iiii) ein Gemisch aus den Komponenten (1) und (3) einerseits und die Komponente (2) andererseits örtlich getrennt voneinander.

Schliesslich ist darauf hinzuweisen, dass die vorteilhaften Eigenschaften des erfindungsgemässen Verfahrens im allgemeinen besonders dann in Erscheinung treten, wenn es als Trockenphasen-Polymerisationsverfahren durchgeführt wird (für dessen Ausgestaltungen typische Beispiele etwa mit den DE-B 1 217 071, 1 520 307 und 1 520 373 gegeben sind).

Was die stoffliche Seite des neuen Katalysatorsystems betrifft, ist im einzelnen das folgende zu sagen:

(1) Zur Titan-III-Komponente

Die als ein Ausgangsstoff für diese Komponente dienenden Titan enthaltenden Verbindungen (a) mit der angegebenen Formel sind die einschlägig üblichen, z.B. solche, wie sie durch Kokristallisation von $TiCl_3$ und $AlCl_3$ oder Reduktion von $TiCl_4$ mittels Aluminium bzw. Gemischen aus Aluminium und Titan erhalten werden können. Besonders gut geeignet sind Kokristallisate der Formel $TiCl_3 \cdot \frac{1}{3} AlCl_3$. Die in Betracht kommenden Titan enthaltenden Verbindungen (a) sind im Handel erhältlich, so dass sich nähere Ausführungen erübrigen.

Als Ester (b) mit der angegebenen Formel kommen ebenfalls die einschlägig üblichen, dieser Formel gehorchenden in Betracht, insbesondere solche, in deren Formel stehen $R^1$ für eine Methyl-, Äthyl-, n-Propyl-, i-Propyl-, n-Butyl-, i-Butyl-, tert.-Butyl-, n-Pentyl, i-Pentyl-, n-Hexyl- oder Benzyl-Gruppe, $R^2$ für Wasserstoff oder eine Methyl-, Äthyl-, n-Propyl-, i-Propyl, n-Butyl-, i-Butyl-, tert.-Butyl-, n-Pentyl-, i-Pentyl-, n-Hexyl-, n-Heptyl-, n-Octyl-, Phenyl-, Benzyl-, 1-Phenyläthyl-, 2-Phenyläthyl-, 3-Phenylpropyl-, 4-Phenylbutyl- oder 5-Phenylpentyl-Gruppe.

Namentliche Beispiele für gut geeignete Ester (b) sind der Essigsäureäthylester, Essigsäurebutylester, Propionsäureäthylester, N-Buttersäureäthylester, n-Valeriansäureäthylester, Phenylessigsäureäthylester, 3-Phenylpropionsäureäthylester, 4-Phenylbuttersäureäthylester und Acrylsäurebutylester sowie Methacrylsäurebutylester.

Der gleichfalls zu verwendende flüssige Kohlenwasserstoff (c) kann ein Kohlenwasserstoff der Art sein, die üblicherweise mit Titan enthaltenden Komponenten für Katalysatoren des Ziegler-Natta-Typs ohne Schaden für den Katalysator bzw. dessen Titan enthaltende Komponente zusammengebracht werden; – z.B. bei der Polymerisation von α-Monoolefinen. Als Beispiele für geeignete Kohlenwasserstoffe seien genannt: Pentane, Hexane, Heptane, Benzine und Cyclohexan.

Die weiterhin zum Herstellen der Titan-III-Komponente dienende Sauerstoff enthaltende Verbindung (d) ist ein Alkohol mit der angegebenen Formel.

Als Alkohole (d) kommen dabei die üblichen, der angegebenen Formel gehorchenden in Betracht, insbesondere solche, in deren Formel X steht für eine Methyl-, Äthyl-, n-Propyl-, i-Propyl-, n-Butyl-, i-Butyl-, tert.-Butyl-, Amyl-, Hexyl-, Cyclohexyl- oder Phenylgruppe. Geeignet sind auch die entsprechenden Diole mit mindestens zwei Kohlenstoffatomen im Molekül.

Namentliche Beispiele für gut geeignete Alkohole sind Äthanol, n-Propanol, n-Butanol und n-Pentanol sowie vor allem n-Butanol.

Zur Herstellung der Titan-III-Komponente dient – gegebenenfalls – auch eine Aluminium enthaltende Verbindung (e) mit der angegebenen Formel.

Als diese kommen dabei wiederum die bei Ziegler-Natta-Katalysatorsystemen einschlägig üblichen, der angegebenen Formel gehorchenden in Betracht, z.B. solche der Formel $Al(C_2H_5)Cl_2$, $Al(C_4H_9)Cl_2$, $Al(C_2H_5)_2Cl$, $Al(C_4H_9)_2Cl$, $Al(C_2H_5)_3$, $Al(C_4H_9)_3$; – wovon besonders gut geeignet sind solche der Formel $Al(C_2H_5)_2Cl$ und $Al(C_4H_9)_2Cl$.

(2) Zur Aluminiumalkyl-Komponente

Als Aluminiumalkyl-Komponente mit der angegebenen Formel kommen wiederum die einschlägig üblichen, dieser Formel gehorchenden in Betracht; sie sind aus Literatur und Praxis so wohlbekannt, dass auf sie nicht näher eingegangen zu werden braucht. Als herausragender Vertreter sei beispielsweise genannt das Diäthylaluminiumchlorid.

(3) Zu den – vorteilhafterweise mitzuverwendenden – phenolischen Stoffen.

Typische Beispiele für gut geeignete Stoffe mit der angegebenen Formel (I) sind solche, in denen der Rest $R^5$ eine tert.-Butylgruppe, der Rest $R^6$ Wasserstoff oder eine tert.-Butylgruppe, der Rest $R^7$ Wasserstoff oder eine niedere Alkylgruppe, wie die Methyl-, Äthyl-, n-Propyl-, i-Propyl-, n-Butyl-, i-Butyl- oder tert.-Butylgruppe sind und o = 1 ist. Hervorzuheben sind auch Stoffe, in denen die Reste $R^5$ und $R^6$ die gleichen Reste wie vorstehend sind und deren Rest $R^7$ sich symbolisieren lässt durch die Formeln

$$-C_pH_{2p}-\underset{\underset{O}{\|}}{C}-O-C_qH_{2q+1} \qquad \text{(mit o = 1)}$$

oder

$$(-C_pH_{2p}-C-\underset{\underset{O}{\|}}{O}-CH_2-)_4C \qquad \text{(mit o = 4)}$$

worin stehen

p für eine ganze Zahl von 0 bis 5, insbesondere 1 bis 4, und

q für eine ganze Zahl von 1 bis 24, insbesondere 1 bis 18,

und wobei die Gruppierungen $-C_pH_{2p}-$ sowie $-C_qH_{2q+1}$ vorzugsweise geradkettig sind.

Namentliche Beispiele für gut geeignete Stoffe mit der angegebenen Formel (I) sind 1-Oxy-2,6-di-tert.-butylbenzol, 4-Oxy-3,5-di-tert.-butyltoluol, der Ester der β-(4′-Oxy-3′,5′-di-tert.-butylphenyl)-propionsäure mit Methanol, Äthanol, n-Propanol, n-Butanol, n-Octanol, n-Dodecanol bzw. n-Octadecanol und der Tetra-ester der vorgenannten Säure mit Pentaerythrit sowie ferner 1,3,5-Trimethyl-2,4,6-tris-(3,5-di-tert.-butyl-4-hydroxy-benzyl)-benzol.

Typische Beispiele für gut geeignete Stoffe mit der angegebenen Formel (II) sind solche, die sich ableiten im Säureteil von der 2-Oxy-4-naphthoe-, 1-Oxy-2-naphthoe-, 2-Oxy-1-naphthoe- oder 1-Oxy-8-naphthoesäure und im Alkoholteil vom n-Octanol, n-Dodecanol oder n-Octadecanol.

Namentliche Beispiele für gut geeignete Stoffe mit der angegebenen Formel (II) sind der 2-Oxy-4-naphthoesäure-n-octadecylester, 1-Oxy-8-naphthoesäure-n-dodecylester, 1-Oxy-8-naphthoesäure-n-octadecylester, 1-Oxy-2-naphthoesäure-n-octylester und der 2-Oxy-1-naphthoesäure-n-octadecylester.

Das Herstellen der neuen Titan-III-Komponente ist einfach und für den Fachmann ohne nähere Erläuterungen möglich. Zu erwähnen ist lediglich das Folgende:

Die Massnahme gemäss (E) sollte zweckmässigerweise dann durchgeführt werden, wenn eine besonders enge Korngrössenverteilung gewünscht wird.

Das Durchführen der Massnahme gemäss (F) bringt im allgemeinen den Effekt, dass – bei etwas verminderter Produktivität des Katalysatorsystems – ein ausgeprägt grobkörniges Polymerisat erhalten wird.

Die Massnahme gemäss (G) wiederum sollte dann getroffen werden, wenn aus Stufe (F) ein agglomeriertes Produkt anfällt.

Beim Durchführen der Massnahme gemäss (H), d.h. beim Herstellen der entsprechenden Suspension, hat sich gezeigt, dass es oft günstig ist, wenn man den Feststoff zunächst zusammenbringt mit einer relativ kleinen Menge des Kohlenwasserstoffs und dann die Gesamtmenge der Sauerstoff enthaltenden Verbindung mit der Restmenge des Kohlenwasserstoffs zufügt.

Im Zuge der Durchführung der Massnahme gemäss (I) ist die Suspension heftig zu bewegen, – was am einfachsten durch Rühren erfolgen kann.

Das Durchführen der Massnahme gemäss (I) hat sich insbesondere dann als zweckmässig gezeigt, wenn man Wert auf ein etwas grobkörnigeres Polymerisat legt.

Das erfindungsgemässe Verfahren erlaubt es, Homo- und Copolymerisate von $C_2$- bis $C_6$-α-Monoolefinen in vorteilhafter Weise herzustellen, wobei besonders geeignete zu polymerisierende α-Monoolefine Propylen, Buten-1 und 4-Methylpenten-1, sowie – zur Copolymerisation – Äthylen sind.

Beispiel 1

Herstellung der Titan-III-Komponente (1)

Es wird so verfahren, dass man eine Titan enthaltende Verbindung (a) der Formel $TiCl_3 \cdot 0{,}33\ AlCl_3$ und als Ester (b) den Phenylessigsäureäthylester einer Mahlbehandlung unterzieht, derart, dass man

(A) mit einer Kugelschwingmühle arbeitet, die eine Mahlbeschleunigung von 47 $m \cdot sec^{-2}$ hat,

(B) die Mühle zunächst mit der Titan enthaltenden Verbindung (a) beschickt und bei einer Temperatur von +38°C über eine Zeitspanne von 16 Stunden in Abwesenheit von Verdünnungsmitteln betreibt, dann

(C) unter Mahlen bei einer Temperatur des Mahlgutes von −15°C die einem Molverhältnis Titan in der Titan enthaltenden Verbindung (a) : Ester (b) von 1:0,32 entsprechende Menge des Esters (b) mit einer Geschwindigkeit von 13 ml/Min pro 2,5 kg Titan enthaltende Verbindung (a) kontinuierlich und in Abwesenheit von Verdünnungsmitteln zugibt, daraufhin

(D) unter Mahlen das Mahlgut über eine Zeitspanne von 64 Stunden auf einer Temperatur von +40°C hält, hierauf

(E) das gemäss (D) erhaltene Produkt über eine Zeitspanne von 20 Minuten bei einer Temperatur von −20°C in Abwesenheit von Verdünnungsmitteln weitervermahlt, und sodann

(F) das gemäss (E) erhaltene Produkt ohne es zu mahlen über eine Zeitspanne von 20 Std. auf einer Temperatur von +70°C hält und dann etwas auflockert.

(G) – Entfällt –

Erfindungsgemäss verfährt man im weiteren so, dass man zusätzlich

(H) eine Suspension herstellt aus

($H_1$) 1 Gew.-Teil des gemäss (F) erhaltenen Produkts,

($H_2$) 5 Gew.-Teilen n-Heptan als Kohlenwasserstoff (c), sowie

($H_3$) n-Butanol als Sauerstoff enthaltende Verbindung (d)

in einer solchen Menge, dass sich ein Molverhältnis Titan aus der Titan enthaltenden Verbindung (a) : Sauerstoff enthaltende Verbindung (d) von 1:0,24 ergibt, anschliessend

(I) die gemäss (H) erhaltene Suspension unter heftigem Rühren über eine Zeitspanne von 35 Minuten auf einer Temperatur von +50°C hält, dann auf eine Temperatur von +20°C bringt, hierauf

(J) – entfällt –

(K) aus der gemäss (I) erhaltenen Suspension den Feststoff abtrennt, mit n-Pentan wäscht sowie trocknet; –

und derart mit dem gemäss (K) erhaltenen, in isolierter Form vorliegenden Feststoff die Titan-III-Komponente (1) gewinnt.

Polymerisation mittels der Titan-III-Komponente (1)

1,0 g der Titan-III-Komponente (1) sowie 1,8 g Diäthylaluminiumchlorid (2) - was einem Atomverhältnis Titan aus der Titan-III-Komponente (1) : Aluminium aus dem Diäthylaluminiumchlorid (2) von etwa 1:3,8 entspricht - werden in einen 2-l-Rührkolben gegeben, der mit 1,5 l trockenem Heptan beschickt ist. Sodann wird unter Rühren und bei den - jeweils durch Regelung konstant gehaltenen - Parametern: Propylendruck = 1 bar, Temperatur = 60°C, über eine Zeitspanne von 5 Stunden polymerisiert, wonach die Polymerisation durch Zugabe von 20 ml Methanol abgebrochen wird. Hierauf wird das Suspensionsmedium durch Destillation abgetrennt.

Daten zu dem dabei erhaltenen Polypropylen finden sich in der untenstehenden Tabelle.

Beispiel 2

Herstellung der Titan-III-Komponente (1)

Es wird so verfahren, dass man eine Titan enthaltende Verbindung (a) der Formel ($TiCl_3 \cdot 0{,}33\ AlCl_3$ und als Ester (b) den Phenylessigsäureäthylester einer Mahlbehandlung unterzieht, derart, dass man

(A) mit einer Kugelschwingmühle arbeitet, die eine Mahlbeschleunigung von 48 $m \cdot sec^{-2}$ hat,

(B) die Mühle zunächst mit der Titan enthaltenden Verbindung (a) beschickt und bei einer Temperatur von +35°C über eine Zeitspanne von 15 Stunden in Abwesenheit von Verdünnungsmitteln betreibt, dann

(C) unter Mahlen bei einer Temperatur des Mahlgutes von −15°C die einem Molverhältnis Titan in der Titan enthaltenden Verbindung (a) : Ester (b) von 1:0,32 entsprechende Menge des Esters (b) mit einer Geschwindigkeit von 15 ml/Min pro 2,5 kg Titan enthaltende Verbindung (a) kontinuierlich und in Abwesenheit von Verdünnungsmitteln zugibt, daraufhin

(D) unter Mahlen das Mahlgut über eine Zeitspanne von 64 Stunden auf einer Temperatur von +40°C hält, hierauf

(E) das gemäss (D) erhaltene Produkt über eine Zeitspanne von 20 Minuten bei einer Temperatur von −25°C in Abwesenheit von Verdünnungsmitteln weitervermahlt, und sodann

(F) das gemäss (E) erhaltene Produkt ohne es zu mahlen über eine Zeitspanne von 20 Stunden auf einer Temperatur von +70°C hält und dann etwas auflockert.

(G) - Entfällt -

Erfindungsgemäss verfährt man im weiteren so, dass man zusätzlich

(H) eine Suspension herstellt aus

($H_1$) 1 Gew.-Teil des gemäss (F) erhaltenen Produkts,

($H_2$) 5 Gew.-Teilen n-Heptan als Kohlenwasserstoff (c), sowie

($H_3$) n-Butanol als Sauerstoff enthaltender Verbindung (d) in einer solchen Menge, dass sich ein Molverhältnis Titan aus der Titan enthaltenden Verbindung (a) : Sauerstoff enthaltende Verbindung (d) von 1:0,36 ergibt, anschliessend

(I) die gemäss H erhaltene Suspension unter heftigem Rühren über eine Zeitspanne von 30 Minuten auf einer Temperatur von +55°C hält, dann auf eine Temperatur von +20°C bringt, hierauf

(J) die gemäss (I) erhaltene Suspension mit einer Aluminium enthaltenden Verbindung (e) der allgemeinen Formel $Al(C_2H_5)_2Cl$ in einer solchen Menge versetzt, dass sich ein Molverhältnis Hydroxygruppen aus der Sauerstoff enthaltenden Verbindung (d) : Alkylgruppen aus der Aluminium enthaltenden Verbindung (e) von 1:0,32 ergibt, und schliesslich

(K) aus der gemäss (J) erhaltenen Suspension den Feststoff abtrennt, mit n-Pentan wäscht sowie trocknet; -

und derart mit dem gemäss (K) erhaltenen, in isolierter Form vorliegenden Feststoff wie Titan-III-Komponente (1) gewinnt.

Polymerisation mittels der Titan-III-Komponente (1)

Sie erfolgt wie in Beispiel 1, zu den Daten des nunmehr erhaltenen Polypropylens siehe ebenfalls die nachstehende Tabelle.

Beispiel 3

Herstellung der Titan-III-Komponente (1)

Sie erfolgt in gleicher Weise wie in Beispiel 1.

Polymerisation mittels der Titan-III-Komponente (1)

Sie erfolgt in Analogie zu Beispiel 1 mit 1,0 g der Titan-III-Komponente (1) und einer solchen Menge Diäthylaluminiumchlorid (2), dass das Atomverhältnis Titan aus der Titan-III-Komponente (1) : Aluminium aus dem Diäthylaluminiumchlorid (2) 1:3,8 beträgt, sowie einer solchen Menge n-Octadecyl-β-(4′-oxy-3′,5′-di-tert.-butylphenyl)-propionat (3), dass das Molverhältnis Diäthylaluminiumchlorid (2) : phenolischem Stoff (3) 25:1 beträgt.

Nähere Angaben zu dem hierbei erhaltenen Polypropylen sind in der Tabelle angegeben.

Beispiel 4

Herstellung der Titan-III-Komponente (1)

Sie erfolgt in gleicher Weise wie in Beispiel 2.

Polymerisation mittels der Titan-III-Komponente (1)

Sie erfolgt in gleicher Weise wie in Beispiel 3. Es wird ein Polypropylen erhalten, dessen Daten sich ebenfalls in der nachstehenden Tabelle finden.

In der Tabelle bedeuten:

Spez. Ausb. = Gewichtsteile an Polymerisat, die pro Gewichtsteil der Titan-III-Komponente – gerechnet als Titan – erhalten werden.

< xyz;% = Prozentualer Anteil des Polymerisats mit einem Teilchendurchmesser von unter xyz µm.

./. = nicht ermittelt.

Tabelle

| Beispiel | Spez. Ausb. | <100;% | <250;% | <500;% |
|---|---|---|---|---|
| 1 | 385 | 0,05 | 1,4 | 16,9 |
| 2 | 390 | 0,05 | 0,3 | 2,5 |
| 3 | 330 | 0,18 | 2,0 | 12,8 |
| 4 | 270 | ./. | 0,1 | 0,25 |

**Patentanspruch**

Verfahren zum Herstellen von Homo- und Copolymerisaten von $C_2$- bis $C_6$-$\alpha$-Monoolefinen bei Temperaturen von 20 bis 160°C und Drücken von 1 bis 100 bar mittels eines Ziegler-Natta-Katalysatorsystems aus

(1) einer Titan-III-Komponente, bei deren Herstellung man
(1.1) eine Titan enthaltende Verbindung (a) der Formel

$TiCl_3 \cdot nAlCl_3$,

worin n für eine Zahl im Bereich von 0,01 bis 1, und
(1.2) einen Ester (b), der insgesamt 2 bis 34 Kohlenstoffatome enthält und die Formel

$R^1$-O-CO-$R^2$ oder

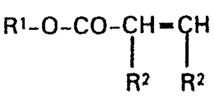

hat worin stehen
$R^1$ für (I) eine 1 bis 16 Kohlenstoffatome aufweisende Alkylgruppe oder (II) eine insgesamt 7 bis 23 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können,
$R^2$ für (I) Wasserstoff, (II) eine 1 bis 18 Kohlenstoffatome aufweisende Alkylgruppe, (III) eine insgesasmt 7 bis 23 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können, (IV) eine Phenylgruppe oder (V) eine insgesamt 7 bis 23 Kohlenstoffatome aufweisende Alkylphenylgruppe, wobei bis zu 5 Wasserstoffatome des Phenylrests durch 1 bis 4 Kohlenstoffatome aufweisende Alkylgruppen substituiert sein können,

einer Mahlbehandlung unterzieht, derart, dass man

(A) mit einer Kugelschwingmühle arbeitet, die eine Mahlbeschleunigung von 30 bis 80 m · $sec^{-2}$ hat,

(B) die Mühle zunächst mit der Titan enthaltenden Verbindung (a) beschickt und – gegebenenfalls – bei einer Temperatur von −50 bis +100°C über eine Zeitspanne von 0,5 bis 100 Stunden in Abwesenheit von Verdünnungsmitteln betreibt, dann

(C) unter Mahlen bei einer Temperatur des Mahlgutes von −50 bis +80°C die einem Molverhältnis Titan in der Titan enthaltenden Verbindung (a): Ester (b) von 1:1,5 bis 1:0,01 entsprechende Menge des Esters (b) mit einer Geschwindigkeit von 0,01 bis 200 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 120 Stunden auf einer Temperatur von +15 bis +100°C hält, hierauf

(E) – gegebenenfalls – das gemäss (D) erhaltene Produkt über eine Zeitspanne von 0,5 bis 60 Minuten bei einer Temperatur von −50 bis +5°C in Abwesenheit von Verdünnungsmitteln weitervermahlt, sodann

(F) – gegebenenfalls und vorteilhafterweise – das gemäss (D) oder (E) erhaltene Produkt ohne es zu mahlen über eine Zeitspanne von 0,25 bis 300 Stunden auf einer Temperatur von +20 bis +150°C hält, und danach

(G) – gegebenenfalls – das gemäss (F) erhaltene Produkt über eine Zeitspanne von 0,5 bis 60 Minuten bei einer Temperatur von −50 bis +5°C in Abwesenheit von Verdünnungsmitteln nachvermahlt,

(2) einer Aluminiumalkyl-Komponente der Formel

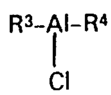

worin $R^3$ und $R^4$ gleich oder verschieden sind und stehen für eine 1 bis 8 Kohlenstoffatome aufweisende Alkylgruppe, sowie

(3) – gegebenenfalls – einem phenolischen Stoff der Formel

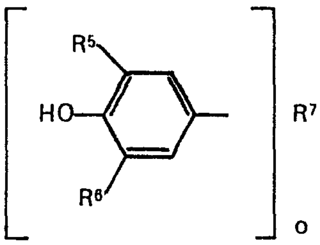

oder (I)

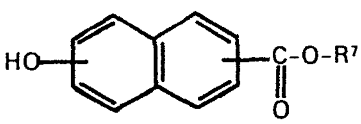

(II)

worin stehen
$R^5$ für eine $C_1$- bis $C_6$-Alkylgruppe,
$R^6$ für Wasserstoff oder eine $C_1$- bis $C_6$-Alkylgruppe,
$R^7$ für Wasserstoff oder einen nicht mehr als 30 Kohlenstoffatome sowie - gegebenenfalls - bis zu insgesamt 6 Äthergruppen und/oder Estergruppen aufweisenden gesättigten Kohlenwasserstoffrest,
$R^{7'}$ für eine $C_2$- bis $C_{24}$-Alkylgruppe, und
o für eine ganze Zahl von 1 bis 6,

mit den Massgaben, dass das Atomverhältnis Titan aus der Titan-III-Komponente (1) : Aluminium aus der Aluminiumalkyl-Komponente (2) im Bereich von 1:1 bis 1:20 liegt, und dass - im gegebenen Fall - das Molverhältnis Aluminiumalkyl-Komponente (2) : phenolischer Stoff (3) 1:1 bis 40:1 beträgt, dadurch gekennzeichnet, das eine Titan-III-Komponente (1) eingesetzt wird, die wie folgt erhalten wurde

(H) es wird eine Suspension hergestellt aus
($H_1$) 1 Gew.-Teil des gemäss (D), (E), (F) oder (G) erhaltenen Produkts,
($H_2$) 0,5 bis 20 Gew.-Teilen eines unter Normalbedingungen flüssigen und unterhalb von 150°C siedenden Kohlenwasserstoffs (c), sowie
($H_3$) einer Sauerstoff enthaltenden Verbindung (d), bestehend aus einem Alkohol, der 1 bis 20 Kohlenstoffatome enthält und die allgemeine Formel

$X(OH)_y$

hat, worin stehen y für 1 oder 2 und X für den Rest eines Kohlenwasserstoffs aus der Reihe der Aromaten oder der gesättigten Aliphaten bzw. Cycloaliphaten, in einer solchen Menge, dass sich ein Molverhältnis Titan aus der Titan enthaltenden Verbindung (a) : Sauerstoff enthaltende Verbindung (d) von 1:0,01 bis 1:2 ergibt, anschliessend wird

(I) die gemäss (H) erhaltene Suspension unter heftiger Bewegung über eine Zeitspanne von 5 bis 120 Minuten auf einer Temperatur von +40 bis +140°C gehalten, dann auf eine Temperatur von +15 bis +25°C gebracht, hierauf wird

(J) - gegebenenfalls - die gemäss (I) erhaltene Suspension mit einer Aluminium enthaltenden Verbindung (e) der allgemeinen Formel

$AlR^8_x Y_{3-x}$,

worin stehen x für 1, 2 oder 3, Y für Chlor oder $R^8$, und $R^8$ für gleiche oder verschiedene, 1 bis 12 Kohlenstoffatome aufweisende Alkylgruppen, in einer solchen Menge versetzt, dass sich ein Molverhältnis Hydroxygruppen aus der Sauerstoff enthaltenden Verbindung (d) : Alkylgruppen aus der Aluminium enthaltenden Verbindung (e) von 1:0,005 bis 1:2 ergibt, und schliesslich wird

(K) - gegebennfalls - aus der gemäss (I) oder (J) erhaltenen Suspension der Feststoff abgetrennt, gewünschtenfalls mit einem unter Normalbedingungen flüssigen und unterhalb von 150°C siedenden Kohlenwasserstoff gewaschen sowie getrocknet; -
und derart eine gemäss (I) oder (J) erhaltene, in suspendierter Form oder gemäss (K) erhaltene, in isolierter Form als Feststoff vorliegende Titan-III-Komponente (1) gewonnen.

**Revendication**

Procédé de préparation d'homopolymères et de copolymères d'α-monooléfines en $C_2$ à $C_6$, à des températures de 20 à 160°C et sous des pressions de 1 à 100 bars, à l'aide d'un système catalytique de Ziegler-Natta constitué de

(1) une composante à titane-III au cours de la préparation de laquelle on soumet
(1.1) un composé contenant du titane (a) de la formule

$TiCl_3 \cdot nAlCl_3$,

dans laquelle n représente un nombre dont la valeur fluctue de 0,01 à 1, et
(1.2) un ester (b) qui comporte au total de 2 à 34 atomes de carbone et qui répond à la formule

$R^1$-O-CO-$R^2$ ou

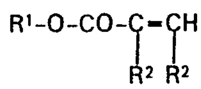

dans laquelle
$R^1$ représente (I) un groupe alcoyle possédant de 1 à 16 atomes de carbone ou (II) un groupe phénylalcoyle possédant au total de 7 à 23 atomes de carbone, où jusqu'à 5 atomes d'hydrogène du radical phényle peuvent être substitués par des groupes alcoyle possédant de 1 à 4 atomes de carbone;
$R^2$ représente (I) un atome d'hydrogène, (II) un groupe alcoyle comportant de 1 à 18 atomes de carbone, (III) un groupe phénylalcoyle comportant au total de 7 à 23 atomes de carbone, où jusqu'à 5 atomes d'hydrogène du radical phényle

peuvent être substitués par des radicaux alcoyle possédant de 1 à 4 atomes de carbone, (IV) un groupe phényle ou (V) un groupe alcoylphényle comportant au total 7 à 23 atomes de carbone, où jusqu'à 5 atomes d'hydrogène du radical phényle peuvent être substitués par des radicaux alcoyle comportant de 1 à 4 atomes de carbone,
à un traitement de broyage mis en œuvre de façon à ce que

(A) on travaille avec un broyeur à boulets à cuve vibrante, doté d'une accélération de broyage de 30 à 80 $m \cdot s^{-2}$,

(B) on garnit d'abord le broyeur du composé contenant le titane (a) et on le fait fonctinoner – éventuellement – à une température de −50 à +100°C pendant une période qui varie de 0,5 à 100 heures en l'absence de diluants, puis

(C) cependant que se poursuit le broyage à une température du produit en cours de broyage de −50 à +80°C, on ajoute continuellement ou par petites fractions et en l'absence de diluants, l'ester (b) en une quantité correspondant à un rapport molaire du titane présent dans le composé contenant le titane (a) à l'ester (b) de 1:1,5 à 1:0,01, avec un débit de 0,01 à 200 ml/mn par 2,5 kg de composé contenant du titane (a), ensuite

(D) cependant que se poursuit le broyage, on maintient le produit soumis au broyage à une température de +15 à +100°C, pendant une période qui varie de 1 à 120 heures, puis

(E) – éventuellement – on poursuit le broyage du produit obtenu à l'étape (D), à une température de −50 à +5°C, pendant une période qui varie de 0,5 à 60 minutes, en l'absence de diluants, ensuite

(F) – éventuellement et avantageusement – on maintient le produit obtenu à l'étape (D) ou à l'étape (E), sans le broyer, à une température de +20 à +150°C, pendant une période qui varie de 0,25 à 300 heures, et finalement

(G) – éventuellement – on poursuit le broyage du produit obtenu à l'étape (F) à une température de −50 à +5°C pendant une période qui fluctue de 0,5 à 60 minutes, en l'absence de diluants,
(2) une composante d'alcoylaluminium de la formule

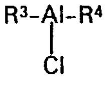

dans laquelle $R^3$ et $R^4$ sont identiques ou différents et représentent un radical alcoyle possédant de 1 à 8 atomes de carbone, et

(3) – éventuellement – une substance phénolique de la formule

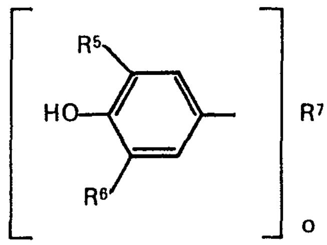

ou (I)

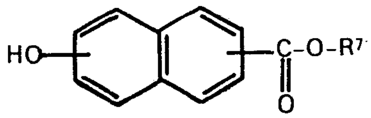

(II)

dans laquelle
$R^5$ représente un radical alcoyle en $C_1$ à $C_6$,
$R^6$ représente un atome d'hydrogène ou un radical alcoyle en $C_1$ à $C_6$,
$R^7$ représente un atome d'hydrogène ou un radical hydrocarboné saturé, ne comportant pas plus de 30 atomes de carbone et – éventuellement – jusqu'à au total 6 groupes éther et/ou groupes ester,
$R^{7'}$ représente un groupe alcoyle en $C_2$ à $C_{24}$, et
o représente un nombre entier dont la valeur fluctue de 1 à 6,
avec les conditions que le rapport atomique du titane de la composante au titane-III (1) à l'aluminium de la composante à l'alcoylaluminium (II) fluctue dans la plage de 1:1 à 1:20, et que – dans le cas donné – le rapport molaire de la composante à l'alcoylaluminium (2) à la substance phénolique (3) varie de 1:1 à 40:1, caractérisé en ce que l'on utilise une composante au titane-III (1) qui a été obtenue comme suit:

(H) on prépare une suspension à partir de
($H_1$) 1 partie en poids des produits obtenus suivant le stade (D), (E), (F) ou (G),
($H_2$) 0,5 à 20 parties en poids d'un hydrocarbure (c) liquide dans les conditions normales et bouillant en dessous de 150°C,
et
($H_3$) un composé (d) contenant de l'oxygène, constitué d'un alcool qui contient de 1 à 20 atomes de carbone et qui répond à la formule générale

$X(OH)_y$

dans laquelle y représente le nombre 1 ou le nombre 2 et X représente le reste d'un hydrocarbure choisi dans la série des composés aromatiques, ou des composés cycloaliphatiques ou aliphatiques saturés, en une quantité telle qu'il s'établisse un rapport molaire du titane provenant du composé contenant du titane (a) au composé contenant de l'oxygène (d) de 1:0,01 à 1:2, et

(I) on maintient la suspension obtenue suivant le stade (H), sous vigoureuse agitation et pendant une durée de 5 à 120 minutes à une température de +40 à +140°C, puis on la porte à une température de +15 à +25°C, et

(J) - éventuellement - on mélange la suspension obtenue suivant le stade (I) à un composé contenant de l'aluminium (e) de la formule générale

$AlR^8_x\ Y_{3-x}$,

dans laquelle x représente le nombre 1, le nombre 2 ou le nombre 3, Y représente un atome de chlore ou $R^8$, et $R^8$ représente des groupes alcoyle, identiques ou différents, comportant de 1 à 12 atomes de carbone, en quantités telles qu'il s'établisse un rapport molaire des groupes hydroxyle provenant du composé contenant de l'oxygène (d) aux groupes alcoyle provenant du composé contenant de l'aluminium (e) de 1:0,05 à 1:2, et, finalement,

(K) - éventuellement - on sépare la matière solide de la suspension obtenue selon le stade (I) ou (J), si cela se révèle souhaitable, on lave cette substance solide avec un hydrocarbure liquide dans les conditions normales et bouillant en dessous de 150°C et on la sèche,
et on recueille de cette manière une composante au titane-III (1) obtenue selon le stade (I) ou (J) sous forme de suspension ou obtenue selon le stade (K) sous forme isolée, comme matière solide.

**Claim**

A process for the preparation of homopolymers and copolymers of $C_2$-α-monoolefins, at from 20 to 160°C, under a pressure of from 1 to 100 bar, by means of a Ziegler-Natta catalyst system comprising

(1) a titanium-III component, in the preparation of which
(1.1) a titanium-containing compound (a) of the formula

$TiCl_3 \cdot nAlCl_3$,

where n is a number from 0.01 to 1, and

(1.2) an ester (b), which contains a total of from 2 to 34 carbon atoms and has the formula

$R^1$-O-CO-$R^2$ or

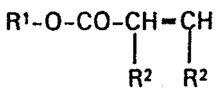

where $R^1$ is (I) alkyl of 1 to 16 carbon atoms or (II) phenylalkyl of a total of 7 to 23 carbon atoms, in which up to 5 hydrogen atoms of the phenyl radical can be substituted by alkyl of 1 to 4 carbon atoms, and $R^2$ is (I) hydrogen, (II) alkyl of 1 to 18 carbon atoms, (III) phenylalkyl of a total of 7 to 23 carbon atoms, in which up to 5 hydrogen atoms of the phenyl radical can be substituted by alkyl having 1 to 4 carbon atoms, (IV) phenyl or (V) alkylphenyl of a total of 7 to 23 carbon atoms, in which up to 5 hydrogen atoms of the phenyl radical can be substituted by alkyl of 1 to 4 carbon atoms,
are subjected to a milling treatment, wherein

(A) a vibratory ball mill having a milling acceleration of from 30 to 80 m $\cdot$ $sec^{-2}$ is used,

(B) the mill is first charged with the titanium-containing compound (a) and - if desired - is run at from −50 to +100°C for a period of from 0.5 to 100 hours in the absence of a diluent, thereafter

(C) the amount of the ester (b) which corresponds to a molar ratio of titanium in the titanium-containing compound (a) : ester (b) of from 1:1.5 to 1:0.01 is added at a rate of 0.01-200 ml/min per 2.5 kg of titanium-containing compound (a), continuously or in small portions, and in the absence of a diluent, whilst milling the mixture at from −50 to +80°C, thereupon

(D) the material is kept for a period of from 1 to 120 hours at from +15 to +100°C whilst being milled, following this

(E) - if desired - the product obtained from (D) is milled further for a period of from 0.5 to 60 minutes at from −50 to +5°C in the absence of a diluent, then

(F) - if desired, and advantageously - the product obtained from (D) or (E) is kept for a period of from 0.25 to 300 hours at from +20 to +150°C without being milled, and thereafter

(G) - if desired - the product obtained from (F) is milled again, for a period of from 0.5 to 60 minutes, at from −50 to +5%C, in the absence of a diluent,

(2) an aluminium-alkyl component of the formula

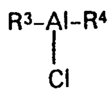

where $R^3$ and $R^4$ are identical or different and each is alkyl of 1 to 8 carbon atoms, and

(3) - if desired - a phenolic compound of the formula

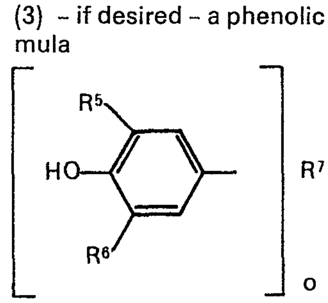

or (I)

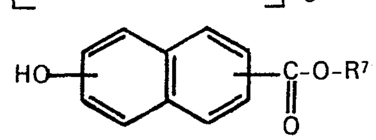

(II)

where $R^5$ is $C_1$–$C_6$-alkyl, $R^6$ is hydrogen or $C_1$–$C_6$-alkyl, $R^7$ is hydrogen or a saturated hydrocarbon radical of not more than 30 carbon atoms, which may or may not contain up to a total of 6 ether groups and/or ester groups, $R^{7'}$ is $C_2$–$C_{24}$-alkyl and o is an integer from 1 to 6,
with the proviso that the atomic ratio of titanium from the titanium-III component (1) : aluminium from the aluminium-alkyl component (2) is from 1:1 to 1:20 and that, where relevant, the molar ratio of aluminium-alkyl component (2) : phenolic compound (3) is from 1:1 to 40:1, in which process a titanium-III component (1) is employed which has been prepared in the following manner: –

(H) a suspension is prepared from
($H_1$) 1 part by weight of the product obtained according to (D), (E), (F) or (G),
($H_2$) from 0.5 to 20 parts by weight of a hydrocarbon (c) which is liquid under standard conditions of temperature and pressure and boils below 150°C, and
($H_3$) an oxygen-containing compound (d), consisting of an alcohol of 1 to 20 carbon atoms, which has the general formula

$$X(OH)_y$$

where y is 1 or 2 and X is the radical of an aromatic or saturated aliphatic or cycloaliphatic hydrocarbon, in such as amount that the molar ratio of titanium from the titanium-containing compound (a) : oxygen-containing compound (d) is from 1:0.01 to 1:2, thereafter

(I) the suspension obtained according to (H) is kept at from +40 to +140°C for a period of from 5 to 120 minutes, with vigorous agitation, and is then brought to from +15°C to +25°C, thereupon

(J) – if desired – the suspension obtained according to (I) is mixed with an aluminium-containing compound (e) of the general formula

$$AlR^8_x\ Y_{3-x},$$

where x is 1, 2 or 3, Y is chlorine or $R^8$, and the $R^8$'s are identical or different alkyl groups of 1 to 12 carbon atoms, in such as amount that the molar ratio of hydroxyl groups of the oxygen-containing compound (d) : alkyl groups of the aluminium-containing compound (e) is from 1:0.005 to 1:2, and finally,

(K) – if desired – the solid is isolated from the suspension obtained according to (I) or (J), if desired, washed with a hydrocarbon which is liquid under standard conditions of temperature and pressure and boils below 150°C and dried,
the solid in suspension obtained according to (I) or (J), or the isolated solid obtained according to (K), constituting the novel titanium-III component (1).